# EUROPÄISCHE PATENTSCHRIFT

(11) **EP 0 870 934 B1**
(45) Veröffentlichungstag und Bekanntmachung des Hinweises auf die Patenterteilung: **14.11.2001**
(21) Anmeldenummer: 98104154.4
(22) Anmeldetag: 09.03.1998
(51) Int. Cl.: F16B 2/10, F16C 29/04, F16C 33/61

(54) **Vorrichtung zum Fixieren von Drähten oder von drahtähnlichen Gebilden**
Device for securing wires or wire-like products
Dispositif pour fixer les fils ou des structures en forme de fil

(30) Priorität: 07.04.1997 CH 80197
(43) Veröffentlichungstag der Anmeldung: 14.10.1998
(73) Patentinhaber: IPT Weinfelden AG, 8570 Weinfelden (CH)
(72) Erfinder: Eberle, Jürg, 8340 Hinwil (CH)
(74) Vertreter: Frei, Alexandra Sarah

(56) Entgegenhaltungen:
- EP-A- 0 173 805
- WO-A-90/02269
- DE-A- 4 317 049
- DE-A- 19 516 478
- DE-A- 19 615 465
- GB-A- 2 137 684

## Beschreibung

Die Erfindung betrifft eine Vorrichtung nach dem Oberbegriff des ersten Patentanspruchs. Die Vorrichtung dient zum Fixieren von Drähten oder von drahtähnlichen Gebilden.

Soll ein Draht oder ein drahtähnliches Gebilde in einer definierten Position gehalten werden, müssen mindestens über die Drahtlänge verteilte, diskrete Fixiermittel vorgesehen werden, mit deren Hilfe der Draht exakt positionierbar und in der vorgesehenen Position fixierbar ist. Derartige Fixiermittel weisen beispielsweise Führungen und Befestigungsschrauben auf, die zur Positionierung und Fixierung des Drahtes zusammenwirken, oder sie weisen Paare von gegeneinander beweglichen und fixierbaren Klemmbacken auf.

Sollen über grosse Drahtlängen mehrere Drähte als Drahtanordnung beispielsweise parallel zueinander positioniert und fixiert werden, so ist dies mit den oben genannten Fixiermitteln sehr aufwendig, da jeder Draht an jeder Fixierstelle einzeln positioniert und fixiert werden muss.

Die Erfindung stellt sich die Aufgabe, eine Vorrichtung zu schaffen zum Fixieren von Drähten oder von drahtähnlichen Gebilden insbesondere in einer Anordnung, in der die Drähte parallel zueinander verlaufen. Die Vorrichtung soll mit einem Minimum an Aufwand herstellbar sein und die Drähte oder drahtähnlichen Gebilde sollen mit Hilfe der erfindungsgemässen Vorrichtung mit einem Minimum an Aufwand positionier- und fixierbar sein.

Diese Aufgabe wird gelöst durch die Vorrichtung wie sie in den Patentansprüchen definiert ist.

Die erfindungsgemässe Vorrichtung zum Fixieren von Drähten oder drahtähnlichen Gebilden besteht im wesentlichen aus mindestens zwei flächigen, im wesentlichen aneinanderliegend angeordneten Backenelementen und aus einem Haltemittel. Die Backenelemente bestehen aus einem flächigen Material, aus dem sie beispielsweise durch Ausstanzen herstellbar sind. Ihre Kanten sind derart geformt, dass jedes Backenelement an einer Mehrzahl von Fixierstellen je eine Klemmbacke aufweist, und derart, dass an jeder Fixierstelle durch die je einen Klemmbacken der mindestens zwei Backenelemente ein Backenpaar gebildet wird. Dabei sind die Fixierstellen auf konzentrischen Kreisen angeordnet und die Klemmbackenpaare derart ausgebildet, dass sie tangential zu den konzentrischen Kreisen wirkende Klemmkräfte auf an den Fixierstellen zu fixierende Drähte oder drahtähnliche Gebilde ausüben können und zwar durch die Klemmbacken des einen Backenelementes im Uhrzeigersinn, durch die Klemmbacken des anderen Backenelementes im Gegenuhrzeigersinn.

Die mindestens zwei Backenelemente sind durch geeignete Mittel um den Mittelpunkt der konzentrischen Kreise mindestens beschränkt schwenkbar miteinander verbunden, durch welche Schwenkbarkeit die Klemmbackenpaare geöffnet und geschlossen werden, und sie werden durch das Halteelement in einer Schwenkposition gehalten, derart, dass die Klemmbackenpaare in eine geschlossene Position gepresst werden und dadurch gegen in den Fixierstellen zu fixierende Drähte gepresst werden.

Es ist vorteilhaft, die Fixierstellen derart vorzusehen, dass sie symmetrisch zu einer durch den Mittelpunkt der konzentrischen Kreise gelegten Ebene symmetrisch angeordnet sind, wobei es schliesslich nicht zwingend ist, in allen Fixierstellen Drähte zu fixieren. In einem solchen Fall können die mindestens zwei Backenelemente identisch ausgestaltet sein, wobei das eine gegenüber dem anderen um 180° gedreht ist.

Das Halteelement kann zusätzlich zu seiner Funktion zum Halten der Bakkenelemente in einer Position, in der die Klemmbackenpaare geschlossen sind, eine Befestigungsfunktion übernehmen, mit der die Backenelemente an einem Träger befestigbar sind.

Um ein Verbiegen der in den Fixierstellen fixierten Drähte zu verhindern ist es vorteilhaft mindestens drei Backenelemente aneinanderliegend anzuordnen, wobei die Klemmbacken der beiden äusseren Backenelemente identisch sind und die Klemmbacken des mittleren Backenelementes den Klemmbacken der äusseren Backenelemente entgegenwirken. Im Falle der oben erwähnten höher symmetrischen Backenelemente kommen drei identische Backenelemente mit alternierenden Drehpositionen zur Anwendung.

Anhand der folgenden Figuren sollen zwei beispielhafte Ausführungsformen der erfindungsgemässen Vorrichtung zum Fixieren von Drähten oder drahtähnlichen Gebilden mehr im Detail beschrieben werden. Dabei zeigen:
- **Figuren 1 und 2**: zwei Backenelemente einer ersten beispielhaften Ausführungsform der erfindungsgemässen Vorrichtung zum Fixieren von Drähten oder drahtähnlichen Gebilden;
- **Figur 3**: die Backenelemente der Figuren 1 und 2 aneinanderliegend angeordnet;
- **Figur 4**: ein Backenelement für eine weitere, beispielhafte Ausführungsform der erfindungsgemässen Vorrichtung;
- **Figur 5**: aneinanderliegend miteinander verbundene Backenelemente gemäss Figur 4, die durch ein Haltemittel in einer Position gehalten sind, in der die Klemmbackenpaare geschlossen sind;
- **Figur 6**: eine beispielhafte Anwendung der Ausführungsform der erfindungsgemässen Vorrichtung gemäss Figuren 4 und 5.

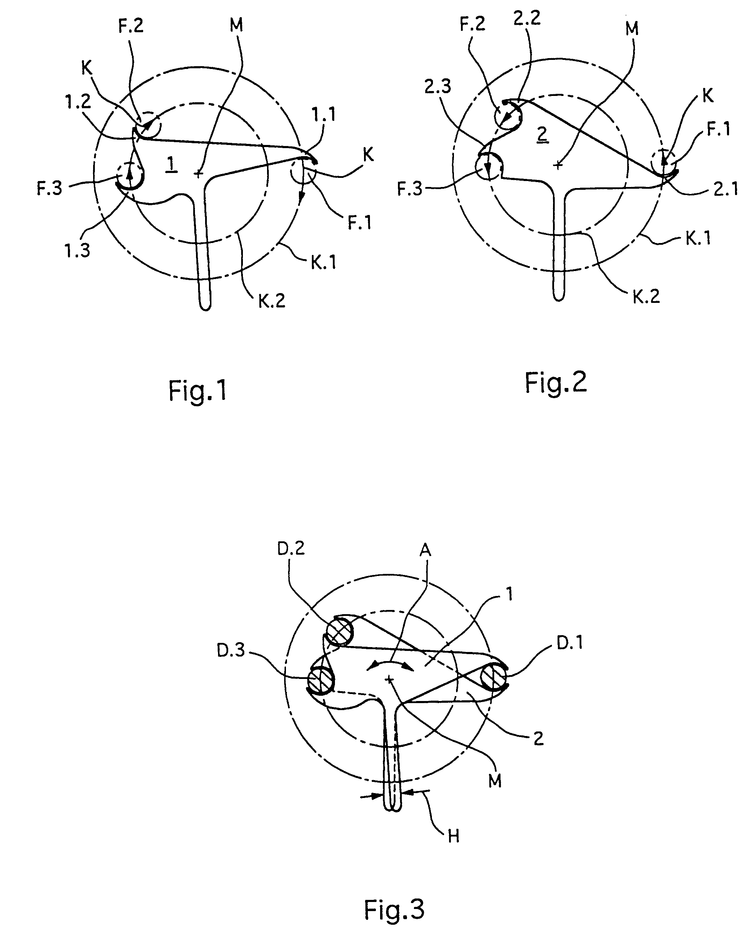

**Figuren 1 und 2** zeigen zwei Backenelemente 1 und 2 für eine erste, beispielhafte Ausführungsform der erfindungsgemässen Vorrichtung. Sie sind beide aus einem flächigen Material (z.B. Kunststoff oder Metall) hergestellt und sind als Draufsicht dargestellt.

Die beiden Backenelemente weisen für drei Fixierstellen F.1 bis F.3, die auf zwei konzentrischen Kreisen K.1 und K.2 mit einem Mittelpunkt M angeordnet sind, je eine Klemmbacke 1.1 bis 1.3 bzw. 2.1 bis 2.3 auf, wobei die Klemmbacken 1.1 bis 1.3 des Backenelementes 1 für Klemmkräfte K mit tangentialer Richtung an einen der konzentrischen Kreise K.1 bzw. K.2 im Uhrzeigersinn, die Klemmbacken 2.1 bis 2.3 des Backenelementes 2 für entsprechende Klemmkräfte im Gegenuhrzeigersinn ausgebildet sind.

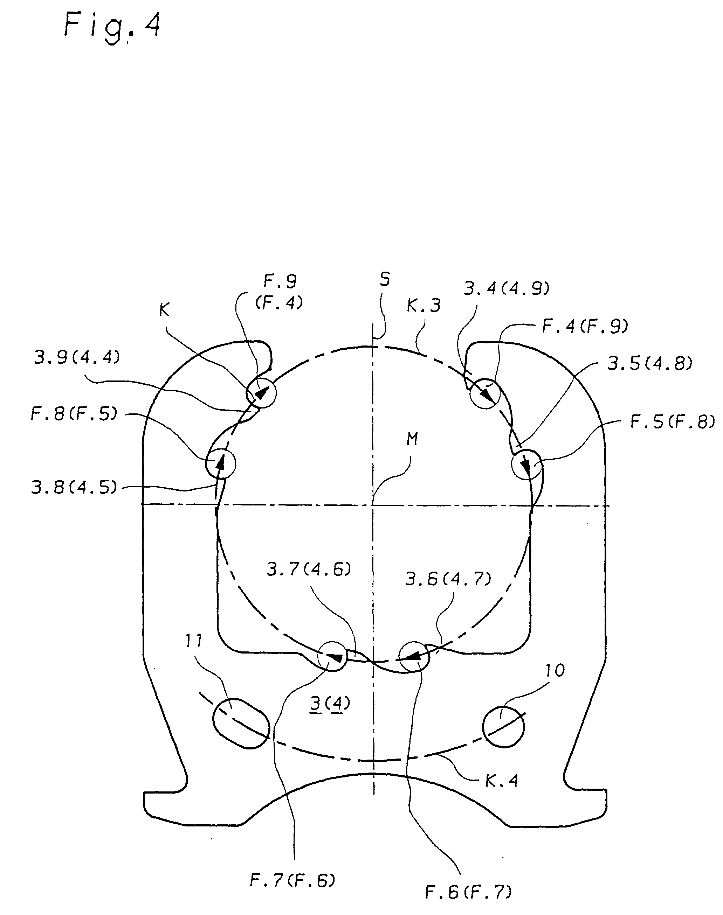

**Figur 3** zeigt die beiden Backenelemente 1 und 2 in einem aneinanderliegenden Zustand (Backenelement 1 gegen den Beschauer gerichtet), wobei sie mit nicht dargestellten, geeigneten Verbindungsmitteln (z.B. Bolzen durch eine Öffnung in M) derart miteinander verbunden sind, dass sie gegeneinander mindestens beschränkt um den Mittelpunkt M verschwenkbar sind (Doppelpfeil A), wobei bei einer Verschwenkung die Backenpaare 1.1/2.1, 1.2/2.2 und 1.3/2.3 geöffnet, bzw. geschlossen werden.

Durch Kräfte H, die von einem nicht dargestellten, geeigneten Haltemittel auf die Backenelemente ausgeübt werden, werden diese in eine Position gepresst, in der die Klemmbacken auf in den Fixierstellen positionierte Drähte D.1 bis D.3 gepresst werden und diese dadurch fixieren, wobei es nicht zwingend ist, dass in allen Fixierstellen Drähte positioniert sind.

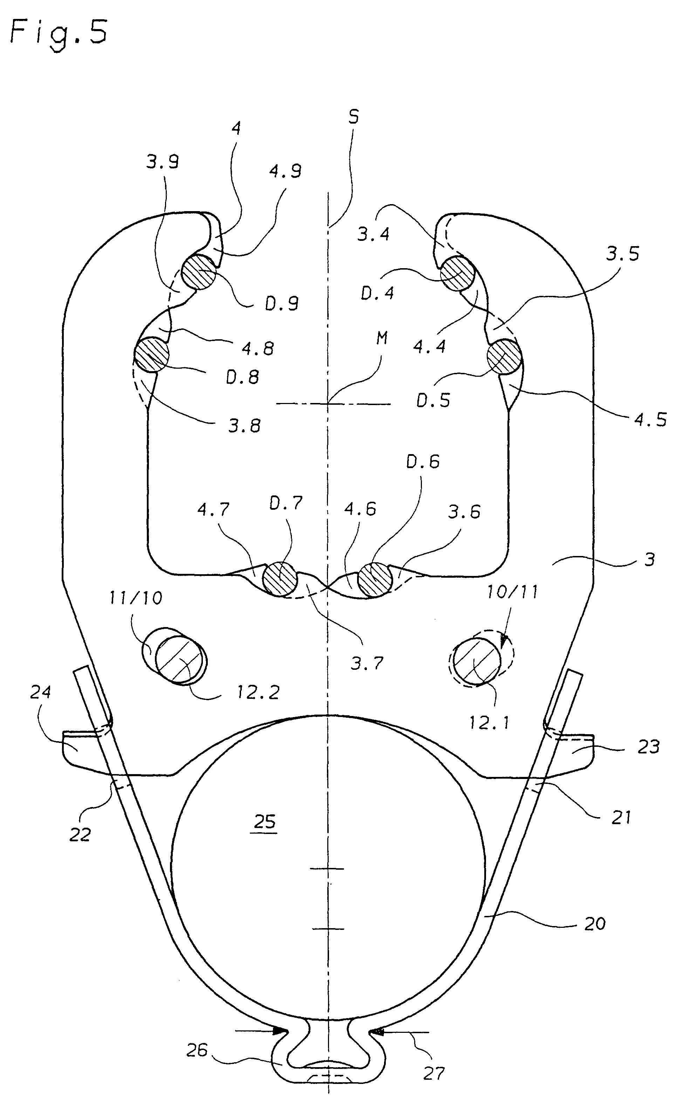

**Figuren 4 und 5** zeigen eine weitere, beispielhafte Ausführungsform der erfindungsgemässen Vorrichtung zum Fixieren von Drähten oder drahtförmigen Gebilden. Es handelt sich dabei um eine Ausführungsform mit 6 Fixierstellen F.4 bis F.9, in denen gegebenenfalls sechs Drähte D.4 bis D.9 fixierbar sind. Die Fixierstellen sind auf einem Kreis K.3 um den Mittelpunkt M angeordnet und zwar symmetrisch zu einer durch den Mittelpunkt M und senkrecht zur flächigen Ausdehnung der Backenelemente 3 und 4 verlaufenden Symmetrieebene S.

**Figur 4** zeigt ein Backenelement 3, das für jede der Fixierstellen F.4 bis F.9 eine Klemmbacke 3.4 bis 3.9 aufweist, wobei die Klemmbacken 3.4 bis 3.9 für die Ausübung von tangential zum Kreis K.3 im Uhrzeigersinn wirkenden Klemmkräften auf Drähte oder drahtförmige Gebilde in den Fixierstellen ausgestaltet sind.

Bedingt durch die Symmetrie der Anordnung der Fixierstellen F.4 bis F.9 entsteht ein mit dem Backenelement 3 kooperierendes Backenelement 4 mit Klemmbacken 4.4 bis 4.9 (Bezugsziffern in der Figur 4 in Klammern) dadurch, dass das Backenelement 3 um eine in der Symmetrieebene S liegende und durch den Mittelpunkt M laufende Achse um 180° gedreht wird und dadurch in sein Spiegelbild (Klemmbacken für Klemmkräfte im Gegenuhrzeigersinn) gewandelt wird.

Zur um M verschwenkbaren Verbindung der Backenelemente 3 und 4 weisen diese eine runde und eine schlitzförmige Öffnung 10 bzw. 11 auf, die auf einem Kreis K.4 um M angeordnet sind.

**Figur 5** zeigt die Backenelemente 3 und 4 der Figur 4 in einer aneinanderliegenden Anordnung (Backenelement 3 gegen den Beschauer gerichtet). Die Bezugsziffern sind dieselben wie in der Figur 4.

Die beiden Backenelemente 3 und 4 sind zur Öffnung und Schliessung der Backenpaare 3.4/4.4 bis 3.9/4.9 beschränkt gegeneinander verschwenkbar um den Mittelpunkt M dadurch, dass in den aneinanderliegenden Öffnungen 10 bzw. 11 Bolzen 12.1 und 12.2 positioniert sind. Die Schwenkbarkeit wird durch die Länge der schlitzförmigen Öffnung 11 beschränkt.

Als Haltemittel 20, mit dem die Backenelemente 3 und 4 in einer Position gehalten werden, in der die Backenpaare 3.4/4.4 bis 3.9/4.9 gegen eine möglichst geschlossene Position bzw. gegen einen zu fixierenden Draht gepresst werden, ist beispielsweise eine Bride vorgesehen, in der beispielsweise zwei Öffnungen 21 und 22 vorgesehen sind, mit denen die Bride über entsprechend ausgeformte Halteohren 23 und 24 der Backenelemente 3 und 4 positionierbar und im Bereiche 26 beipielsweise mit einer Zange (Pfeile 27) deformierbar ist. Derartige Briden sind im Handel unter dem Namen Oetker-Briden erhältlich. Die Bride dient gleichzeitig dazu, die Backenelemente auf einem Träger 25 mit beispielsweise einem runden Querschnitt zu befestigen, wobei die Vorrichtung zum Fixieren und damit die Anordnung der Fixierstellen F.4 bis F.9 relativ zum Träger 25 in verschiedensten Schwenkpositionen angeordnet werden kann.

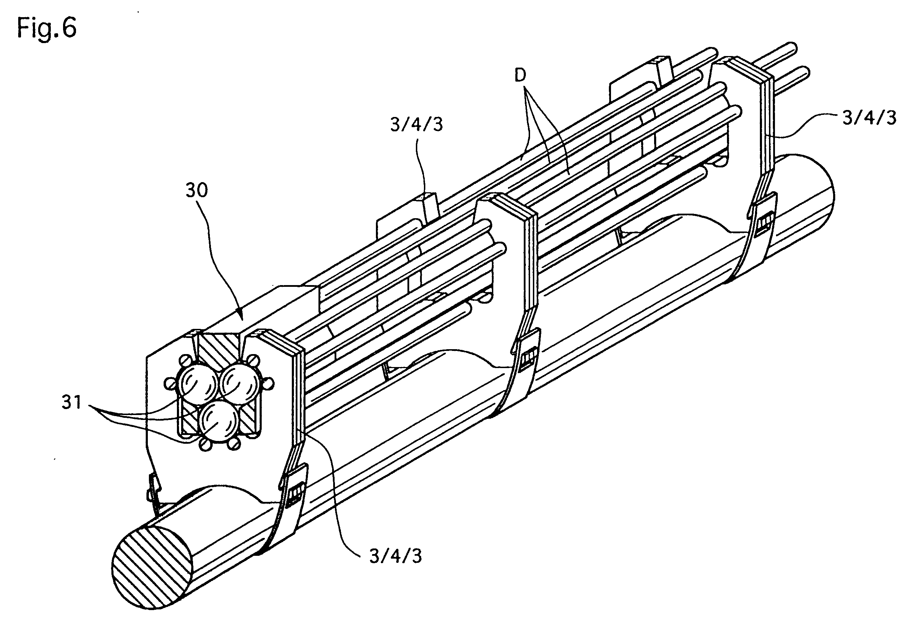

**Figur 6** zeigt eine beispielhafte Anwendung der Ausführungsform der erfindungsgemässen Vorrichtung zum Fixieren von Drähten, wie sie im Zusammenhang mit den Figuren 4 und 5 beschrieben wurde. Die zu fixierenden Drähte D bilden dabei die Schienen für ein Transportmittel 30, das auf Dreiergruppen von Kugeln 31 rollt. Derartige Transportmittel sind bekannt aus der Publikation EP-0387318 (oder US-5074678). Die drahtförmigen Schienen werden durch voneinander beabstandet angeordnete, erfindungsgemässe Vorrichtungen in ihren Positionen fixiert.

Wie aus der Figur 6 zu erkennen ist, weisen die angewendeten Vorrichtungen zum Fixieren der Drähte nicht zwei sondern drei Backenelemente gemäss Figur 4 auf. Alle drei Backenelemente sind dabei identisch, wobei das mittlere Backenelement beispielsweise eine Ausrichtung wie Backenelement 3 in Figur 5 hat und die äusseren Backenelemente eine Ausrichtung wie Backenelement 4 in der Figur 5 haben. Die aneinanderliegenden Backenelemente sind in der Figur 6 auch entsprechen bezeichnet (3/4/3).

Es ist offensichtlich, dass die Montage des Schienensystems gemäss Figur 6 mit den erfindungsgemässen Vorrichtungen zum Fixieren der Drähte gegenüber bekannten Vorrichtungen mit derselben Funktion bedeutend einfacher ist.

In allen Figuren 1 bis 6 sind Drähte mit rundem Querschnitt dargestellt, die durch die erfindungsgemässen Vorrichtungen fixiert werden. Es ist offensichtlich, dass auch Drähte oder drahtähnliche Gebilde mit anderen Querschnitten mit der erfindungsgemässen Vorrichtung fixierbar sind, wobei gegebenenfalls die Form der Klemmbacken an einen solchen Querschnitt anzupassen ist.

## Patentansprüche

1. Vorrichtung zum Fixieren von Drähten (D.4 bis D.9) oder von drahtähnlichen Gebilden mit Hilfe von Klemmbackenpaaren (3.4/4.4 bis 3.9/4.9), **dadurch gekennzeichnet,**
**dass** die Vorrichtung zwei aus einem flächigen Material bestehende, im wesentlichen aneinanderliegend und gegeneinander um einen Mittelpunkt (M) mindestens beschränkt verschwenkbar miteinander verbundene Backenelemente (3, 4) und ein Haltemittel (20) aufweist,
**dass** jedes der Backenelemente (3, 4) für eine Mehrzahl von auf einem Kreis (K.3) oder auf mehreren konzentrischen Kreisen um den Mittelpunkt (M) angeordnete Fixierstellen (F.4 bis F.9) je eine Klemmbacke (3.4, 3.5...., 4.4, 4.5....) zur Ausübung einer tangential an den Kreis (K.3) oder die Kreise gerichtete Klemmkraft (K) aufweist,
wobei in jeder Fixierstelle (F.4 bis F.9) eine Klemmbacke (3.4...3.9) des einen Backenelementes (3) und eine Klemmbacke (4.4...4.9) des anderen Backenelementes (4) ein Klemmbackenpaar bilden
und wobei durch alle Klemmbacken des einen Backenelementes (3) Klemmkräfte im Uhrzeigersinn um den Mittelpunkt (M) und durch die Klemmbacken des anderen Backenelementes (4) Klemmkräfte im Gegenuhrzeigersinn ausübbar sind und die Backenpaare durch Verschwenkung der Backenelemente gegeneinander geöffnet bzw. geschlossen werden,
und **dass** mit Hilfe das Haltemittels (20) die Backenelemente (3, 4) in eine Schwenkposition pressbar sind, in der die Klemmbackenpaare (3.4/4.4....3.9/4.9) geschlossen sind.

2. Vorrichtung nach Anspruch 1, **dadurch gekennzeichnet, dass** sie mehr als zwei Backenelemente (3/4/3) aufweist, wobei die Backenelemente derart abwechselnd aneinanderliegend angeordnet sind, dass von zwei benachbarten Backenelementen durch die Klemmbacken des einen Backenelementes Klemmkräfte im Uhrzeigersinn und durch die Klemmbacken des anderen Backenelementes Klemmkräfte im Gegenuhrzeigersinn ausübbar sind.

3. Vorrichtung nach einem der Ansprüche 1 oder 2, **dadurch gekennzeichnet, dass** die Fixierstellen eine Anordnung bilden, die symmetrisch ist zu einer Symmetrieebene (S), die senkrecht zur flächigen Ausdehnung der Backenelemente steht und durch den Mittelpunkt (M) verläuft, und dass die Backenelemente (3, 4) derart ausgebildet sind, dass sie durch Drehung um 180° in ihr Spiegelbild wandelbar sind.

4. Vorrichtung nach einem der Ansprüche 1 bis 3, **dadurch gekennzeichnet, dass** die Backenelemente mittels Bolzen (12.1, 12.2) miteinander verbunden sind, welche Bolzen (12.1, 12.2) in aufeinanderliegenden Öffnungen (10, 11) der Backenelemente (3, 4) positioniert sind.

5. Vorrichtung nach Anspruch 4, **dadurch gekennzeichnet, dass** die Öffnungen (10, 11) je eine runde und eine schlitzförmige Öffnung sind, die auf einem Kreis (K.4) um den Mittelpunkt (M) angeordnet sind.

6. Vorrichtung nach einem der Ansprüche 1 bis 5, **dadurch gekennzeichnet, dass** das Halteelement (20) zur Befestigung der Vorrichtung an einem Träger ausgebildet ist.

7. Vorrichtung nach Anspruch 6, **dadurch gekennzeichnet, dass** das Halteelement (20) als Bride mit Öffnungen (21, 22) ausgebildet ist und dass die Backenelemente (3, 4) Halteohren (23, 24) aufweisen, die in den Öffnungen der Bride positionierbar sind.

8. Verwendung der Vorrichtung gemäss einem der Ansprüche 1 bis 7 für die Fixierung von drahtförmigen Schienen für ein Transportsystem.

9. Verwendung nach Anspruch 8, **dadurch gekennzeichnet, dass** das Transportsystem Transportmittel aufweist, die auf Dreiergruppen von Kugeln rollen und dass für jede der Kugeln einer Dreiergruppe zwei Schienen vorgesehen sind.

## Claims

1. Device for fixing wires (D.4 to D.9) or wire-like structures with the aid of pairs of clamping jaws (3.4/4.4 to 3.9/4.9), **characterized**
**in that** the device has two jaw elements (3, 4), which consist of a sheet-like material and are connected to one another such that they essentially butt against one another and can be pivoted in relation to one another at least to a limited extent about a centre point (M), and a retaining means (20),
**in that** each of the jaw elements (3, 4), for a plurality of fixing locations (F.4 to F.9) arranged on a circle (K.3) or on a plurality of concentric circles around the centre point (M), has in each case one clamping jaw (3.4, 3.5, etc., 4.4, 4.5, etc.) for exerting a clamping force (K) directed tangentially to the circle (K.3) or the circles,
it being the case that, in each fixing location (F.4 to F.9), a clamping jaw (3.4 ... 3.9) of one jaw element (3) and a clamping jaw (4.4 ... 4.9) of the other jaw element (4) form a pair of clamping jaws,
and it being the case that all the clamping jaws of one jaw element (3) can exert clamping forces in the clockwise direction around the centre point (M) and the clamping jaws of the other jaw element (4) can exert clamping forces in the anticlockwise direction, and the pairs of jaws are opened and closed by the jaw elements being pivoted in relation to one another,
and **in that**, with the aid of the retaining means (20), the jaw elements (3, 4) can be pressed into a pivot position in which the pairs of clamping jaws (3.4/4.4 .. 3.9/4.9) are closed.

2. Device according to Claim 1, **characterized in that** it has more than two jaw elements (3/4/3), the jaw elements being arranged such that they butt against one another alternately so that, of two adjacent jaw elements, the clamping jaws of one jaw element can exert clamping forces in the clockwise direction and the clamping jaws of the other jaw element can exert clamping forces in the anticlockwise direction.

3. Device according to either of Claims 1 and 2, **characterized in that** the fixing locations form an arrangement which is symmetrical to a plane of symmetry (S) which is located perpendicularly to the surface-area extent of the jaw elements and runs through the centre point (M), and **in that** the jaw elements (3, 4) are designed such that they can be turned into their mirror image by rotation through 180°.

4. Device according to one of Claims 1 to 3, **characterized in that** the jaw elements are connected to one another by means of bolts (12.1, 12.2) which are positioned in openings (10, 11) which are located one above the other and belong to the jaw elements (3, 4).

5. Device according to Claim 4, **characterized in that** the openings (10, 11) are in each case one round and one slot-like opening which are arranged on a circle (K.4) around the centre point (M).

6. Device according to one of Claims 1 to 5, **characterized in that** the retaining element (20) is designed for fastening the device on a carrier.

7. Device according to Claim 6, **characterized in that** the retaining element (20) is designed as a clip with openings (21, 22), and **in that** the jaw elements (3, 4) have retaining lugs (23, 24) which can be positioned in the openings of the clip.

8. Use of the device according to one of Claims 1 to 7 for fixing wire-like rails for a transporting system.

9. Use according to Claim 8, **characterized in that** the transporting system has transporting means which roll on groups of three balls, and **in that** two rails are provided for each of the balls of a group of three.

## Revendications

1. Dispositif pour fixer des fils (D.4 à D.9) ou des structures en forme de fils à l'aide de paires de mâchoires de serrage (3.4/4.4 à 3.9/4.9), **caractérisé en ce que**
le dispositif comporte deux éléments formant mâchoires (3, 4), qui sont en un matériau plat et qui sont assemblés l'un à l'autre globalement adjacents et de manière à pouvoir pivoter l'un par rapport à l'autre au moins de façon limitée autour d'un centre (M), et un moyen de soutien (20),
chacun des éléments formant mâchoires (3, 4) comporte pour une pluralité de points de fixation (F.4 à F.9), disposés sur un cercle (K.3) ou sur plusieurs cercles concentriques autour du centre (M), à chaque fois une mâchoire de serrage (3.4, 3.5, ..., 4.4, 4.5, ...) destinée à exercer une force de serrage (K) orientée tangentiellement au cercle (K.3) ou aux cercles,
une mâchoire de serrage (3.4 à 3.9) d'un élément formant mâchoire (3) et une mâchoire de serrage (4.4 à 4.9) de l'autre élément formant mâchoire (4) formant une paire de mâchoires de serrage dans chaque point de fixation (F.4 à F.9)
et des forces de serrage pouvant être exercées par toutes les mâchoires de serrage d'un élément formant mâchoire (3) dans le sens des aiguilles d'une montre autour du centre (M) et des forces de serrage pouvant être exercées par les mâchoires de serrage de l'autre élément formant mâchoire (4) dans le sens inverse des aiguilles d'une montre et les paires de mâchoires pouvant être ouvertes ou fermées l'une par rapport à l'autre par un pivotement des éléments formant mâchoires, et **en ce que** les éléments formant mâchoires (3, 4) peuvent être poussés à l'aide du moyen de soutien (20) dans une position pivotée dans laquelle les paires de mâchoires de serrage (3.4/4.4 à 3.9/4.9) sont fermées.

2. Dispositif selon la revendication 1, **caractérisé en ce qu'**il comporte plus de deux éléments formant mâchoires (3/4/3), les éléments formant mâchoires étant disposés alternativement adjacents de telle sorte que, par les deux éléments formant mâchoires voisins, des forces de serrage peuvent être exercées dans le sens des aiguilles d'une montre par les mâchoires de serrage d'un élément formant mâchoire et des forces de serrage peuvent être exercées dans le sens inverse des aiguilles d'une montre par les mâchoires de serrage de l'autre élément formant mâchoire.

3. Dispositif selon l'une des revendications 1 ou 2, **caractérisé en ce que** les points de fixation forment un dispositif qui est symétrique par rapport à un plan de symétrie (S) qui est perpendiculaire à l'extension surfacique des éléments formant mâchoires et qui passe par le centre (M) et **en ce que** les éléments formant mâchoires (3, 4) sont conçus de telle sorte qu'ils sont transformables en leur image réfléchie par une rotation de 180°.

4. Dispositif selon l'une des revendications 1 à 3, **caractérisé en ce que** les éléments formant mâchoires sont assemblés au moyen d'axes (12.1, 12.2), lesquels axes (12.1, 12.2) sont positionnés dans des ouvertures superposées (10, 11) des éléments formant mâchoires (3, 4).

5. Dispositif selon la revendication 4, **caractérisé en ce que** les ouvertures (10, 11) sont respectivement une ouverture ronde et une ouverture en forme de fente qui sont disposées sur un cercle (K.4) autour du centre (M).

6. Dispositif selon l'une des revendications 1 à 5, **caractérisé en ce que** l'élément de soutien (20) est conçu pour la fixation du dispositif sur un support.

7. Dispositif selon la revendication 6, **caractérisé en ce que** l'élément de soutien (20) est conçu comme une bride avec des ouvertures (21, 22) et **en ce que** les éléments formant mâchoires (3, 4) comportent des oreilles de soutien (23, 24) qui peuvent être positionnées dans les ouvertures de la bride.

8. Utilisation du dispositif selon l'une des revendications 1 à 7 pour la fixation de rails en forme de fils destinés à un système de transport.

9. Utilisation selon la revendication 8, **caractérisée en ce que** le système de transport comporte des moyens de transport qui roulent sur des groupes de trois billes et **en ce qu'**il est prévu deux rails pour chacune des billes d'un groupe de trois.
